# EUROPEAN PATENT APPLICATION

(11) **EP 4 545 372 A1**
(43) Date of publication of application: **30.04.2025**
(21) Application number: 24196818.9
(22) Date of filing: 27.08.2024
(51) Int. Cl.: B60W 40/072, B60W 50/14, G01C 21/00

(54) **VEHICULAR ROAD-CONDITION DETECTION APPARATUS AND VEHICULAR DISPLAY CONTROL METHOD**

(30) Priority: 23.10.2023 JP 2023181990
(71) Applicant: Suzuki Motor Corporation, Shizuoka 432-8611 (JP)
(72) Inventor: NAGASHIMA, Taira, HAMAMATSU-SHI, 432-8611 (JP)
(74) Representative: Plasseraud IP

(57) **Abstract**

A display control apparatus 1 uses an image or video for acquiring information on conditions of a road on which a vehicle is traveling, the image or video being generated by a front camera 301. Reliability Drel of the information on conditions of the road is determined based on map information of the road or vehicle information on behavior of the vehicle. The information on conditions of the road (Curvature C) is updated to the latest information depending on the reliability Drel.

## Description

### BACKGROUND OF THE INVENTION

### Field of the Invention

The present invention relates to a vehicular road-condition detection apparatus (i.e., a road-situation detector of a vehicle) and a vehicular display control method (i.e., a display control method for a vehicle).

### Description of the Related Art

In a known vehicular technique related to road conditions, an image depicting conditions of a road ahead of a vehicle is generated and displayed on a display to encourage a driver to recognize the road conditions.

[Patent Document 1] JP 2005-145434 A

With the background of advanced systems, techniques for displaying information on the road conditions in addition to objects such as traffic signs in real time are being developed. However, when cameras are used to acquire information, it is difficult to acquire sufficient information on general roads due to complexity of boundaries that divide lanes (called "lane marks"), and currently, only consideration is being given to using the techniques on expressways where it is considered relatively easy to acquire information. On the assumption of using the techniques on general roads, there is a concern that detection of a road shape (e.g., curvature which is one of the indicators) based on images from the cameras becomes unstable and this causes hunting in the display and makes the driver feel uneasy.

### SUMMARY OF THE INVENTION

In view of the above-described circumstances, an object of the present invention is to provide a vehicular road-condition detection apparatus and a vehicular display control method, which can suppress a situation of causing problems with display and other controls in the case of using a camera for acquiring information.

To solve the above-mentioned problems, a vehicular road-condition detection apparatus in one aspect of the present invention includes: a road-information acquisition unit configured to use an image or video for acquiring information on conditions of a road on which a vehicle is traveling, the image or video being generated by a front camera disposed to be able to image the road ahead of the vehicle; a reliability determination unit configured to determine reliability of the information on conditions of the road acquired by the road-information acquisition unit based on map information of the road or vehicle information on behavior of the vehicle; and a road-information update unit configured to update the information on conditions of the road to the latest information acquired by the road-information acquisition unit depending on the reliability of the information determined by the reliability determination unit.

The vehicular road-condition detection apparatus may further include a road-information display unit configured to display information updated by the road-information update unit.

The road-information acquisition unit may be configured to acquire curvature of the road as the information on conditions of the road.

The road-information update unit may be configured to update the information on conditions of the road more frequently as the reliability of the information is higher. In other words, when the reliability of the information is high, the information on conditions of the road may be updated more frequently than when the reliability of the information is low.

The road-information update unit may be configured to have an updatability determination value that is set to be able to be increased or decreased. In such case, the road-information update unit may update the information when the updatability determination value reaches a predetermined value.

The road-information update unit may be configured to differentiate change amount depending on the reliability of the information, the change amount being added to or subtracted from the updatability determination value at each predetermined period of time.

The map information may include at least one of: a type of a road on which the vehicle is traveling; presence/absence of a branch road ahead of the vehicle; increase or decrease in number of lanes ahead of the vehicle; and presence/absence of a construction site ahead of the vehicle.

The vehicle information may include at least one of a yaw rate of the vehicle and whether a driver intends to change lanes or not.

A vehicular display control method in another aspect of the present invention includes the steps of: using an image or video to acquire information on conditions of a road on which a vehicle is traveling, the image or video being generated by a front camera disposed to be able to image the road ahead of the vehicle; and acquiring map information of the road or vehicle information on behavior of the vehicle; determining reliability of the information on conditions of the road based on the map information of the road or the vehicle information on behavior of the vehicle; updating the information on conditions of the road to the latest information depending on the reliability of the information; and displaying updated information.

### EFFECTS OF THE INVENTION

According to one aspect of the present invention, reliability of information acquired from an image or video generated by a front camera is determined, and information to be used for display and/or other controls is updated depending on this reliability. This configuration can suppress a situation where detection instability and/or hunting in the display is caused in the case of using the front camera for acquiring information and such problems make the driver feel uneasy or causes further defects in the display or other controls.

### BRIEF DESCRIPTION OF THE DRAWINGS

In the accompanying drawings:
Fig. 1 is a schematic diagram illustrating a configuration of a vehicular road-condition detection apparatus according to one embodiment of the present invention;
Fig. 2 is a block diagram illustrating an internal configuration of a controller (i.e., display controller) according to the embodiment
Fig. 3 is a flowchart illustrating an overall flow of a control (i.e., a curvature display control) to be performed by the display controller;
Fig. 4 is a flowchart illustrating updatability determination processing in the curvature display control;
Fig. 5 is a flowchart illustrating gain setting processing in the curvature display control;
Fig. 6A to Fig. 6C are schematic diagrams illustrating curvature display images that can be switched by the curvature display control; and
Fig. 7A to Fig. 7C are schematic diagrams illustrating updatability determination using a count value.

### DETAILED DESCRIPTION

Hereinbelow, embodiments of the present invention will be described by referring to the accompanying drawings.

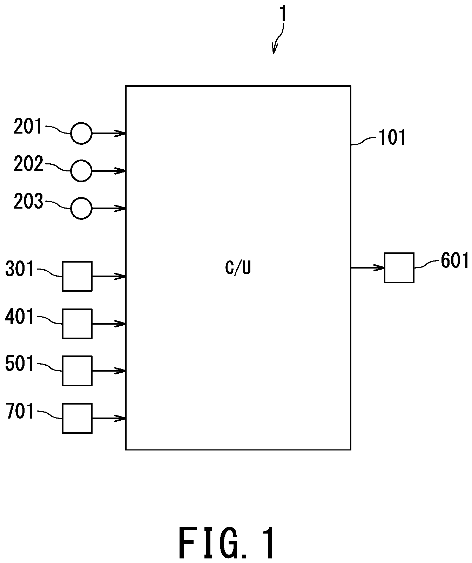

Fig. 1 illustrates an overall configuration of a vehicular road-condition detection apparatus 1 according to one embodiment of the present invention.

The road-condition detection apparatus 1 according to the present embodiment includes a controller 101. The controller 101 is configured as an electronic control unit. The road-condition detection apparatus 1 further includes a vehicle position sensor 201, an acceleration sensor 202, other sensors capable of acquiring information to be used for controls by the controller 101, a direction indicator 203, a camera 301 for monitoring the front (hereinafter referred to as "the front camera 301"), an in-vehicle navigation system 401, and an external communication unit 501.

The controller 101 is composed of a microcomputer that includes a central processing unit (CPU), an input/output interface, and a storage device such as a ROM and a RAM. The controller 101 constitutes a calculation unit of the road-condition detection apparatus 1, and receives output signals from various sensors that constitute a detection unit of the road-condition detection apparatus 1, such as the vehicle position sensor 201. The controller 101 performs a predetermined calculation related to a display control on the basis of the output information from the sensors, generates a command signal based on the calculation result, and outputs the command signal to a display unit 601. The road-condition detection apparatus 1 provided with the display unit 601 can also be referred to as a display control apparatus of a vehicle, and the controller 101 can constitute a calculation unit of the display control apparatus and can also be referred to as a display controller.

The vehicle position sensor 201 detects the current position of the own vehicle. The vehicle position sensor 201 includes a receiver of a satellite positioning system (GPS) and outputs the current position of the own vehicle detected via the GPS to the controller 101. The controller 101 can determine the vehicular current position on a road map by comparison with map information provided by the in-vehicle navigation system 401 as described below.

The acceleration sensor 202 detects accelerations acting on the vehicle, and outputs the detected accelerations to the controller 101. The acceleration sensor 202 may be configured as a six-axis inertial measurement unit (IMU), which can detect three translational accelerations along respective three mutually perpendicular axes and three angular velocities around respective three axes. On the basis of these translational accelerations and angular velocities, the acceleration sensor 202 detects a forward/rearward acceleration, a left/right acceleration, and an up/down acceleration of the vehicle as well as a pitching angular velocity, a yawing angular velocity (hereinafter referred to as "the yaw rate"), and a rolling angular velocity of the vehicle.

The direction indicator 203 shows the direction when the vehicle turns right or left or changes its course. In the present embodiment, the output signal of the direction indicator 203 is treated as an indicator of whether the driver intends to change lanes or not. The controller 101 receives the output signal of the direction indicator 203, and uses this output signal for determining whether the driver intends to change lanes or not.

The front camera 301 is installed such that the front of the own vehicle is within its field of view, and can image the road ahead of the own vehicle. When there is another vehicle traveling ahead of the own vehicle, the front camera 301 can image the other vehicle. Imaging targets of the front camera 301 include not only the road itself but also road-related installations such as a road marking and a roadside traffic sign. In the present embodiment, the front camera 301 can analyze the generated images of the road and identify the shape of the road, such as the curvature and width of the road. The front camera 301 is configured as a camera module provided with an imaging unit and a computing unit, and can be installed inside the vehicle cabin by being built into a rearview mirror above a windshield, for example.

The in-vehicle navigation system 401 has prestored map information of roads. In association with the map information, the in-vehicle navigation system 401 stores: information on the number of lanes on the road; information on road markers such as traveling straight ahead, right turn, and left turn; and information on traffic regulations such as a legal speed limit, a maximum speed, and one-way traffic. The in-vehicle navigation system 401 can communicate with the vehicle position sensor 201, and is provided with a dedicated display on which the current position of the own vehicle is displayed together with the road map.

The external communication unit 501 acquires information on a construction site or an accident through wireless communication with the outside. The external communication unit 501 includes a receiver of a vehicle information and communication system (VICS: registered trademark), and outputs road traffic information acquired via the VICS (registered trademark), specifically, position information on a construction site or an accident site, to the controller 101. The external communication unit 501 is not limited to such a configuration and may also be configured to acquire information on construction sites and other traffic information items through road-to-vehicle communication.

The display unit 601 displays information on the road, on which the own vehicle is currently traveling, to the driver. Specifically, the display unit 601 displays the conditions of the road extending ahead of the own vehicle. In the present embodiment, the information to be displayed by the display unit 601 includes the curvature of the road and/or information related to the curvature, and the display unit 601 receives a signal indicating the curvature of the road as a command signal from the display controller 101.

The display unit 601 can be realized as a meter display, a head-up display (HUD), or any other suitable type of display unit. For example, in the case of the meter display, the display unit 601 can be realized by incorporating a screen for displaying the road conditions into the meter display behind the steering wheel to be handled by the driver. For example, in the case of the head-up display, the display unit 601 can be realized by forming a display area for displaying road conditions in the projection region of the windshield.

The display controller 101 is communicably interconnected to the front camera 301, the in-vehicle navigation system 401, and the external communication unit 501 via an in-vehicle network using a CAN protocol, for example.

In addition to the above-described components, the road-condition detection apparatus 1 further includes a start switch 701. The driver can manually operate the start switch 701 to power on the road-condition detection apparatus 1 and activate the road-condition detection apparatus 1.

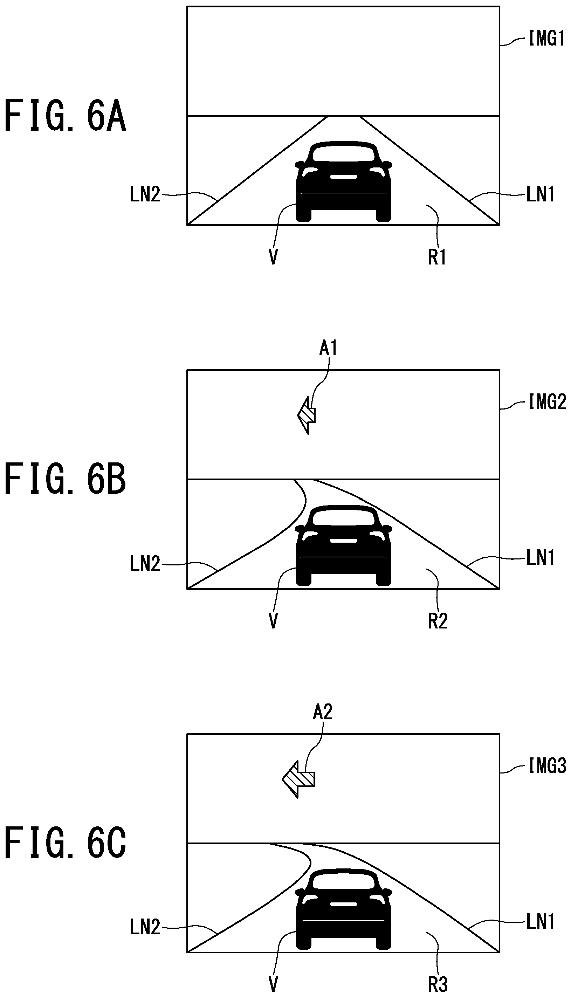

Fig. 6A to Fig. 6C are schematic diagrams illustrating images (i.e., curvature display images in the present embodiment) to be displayed by the display unit 601.

In the present embodiment, images IMG indicating the curvature of the road (hereinafter referred to as "the curvature display images IMG") are displayed as information on the road conditions in a switching manner depending on the magnitude of the curvature. Each of Fig. 6A to Fig. 6C illustrates the curvature display image IMG to be displayed when the vehicle V is traveling on a road R that curves to the left ahead of the vehicle V (i.e., left-hand curve). Fig. 6A illustrates a curvature display image IMG1 when the vehicle is traveling on a left curved road R1 with the smallest curvature, i.e., the maximum curve radius. Fig. 6C illustrates a curvature display image IMG3 when the vehicle is traveling on a left curved road R3 with the largest curvature, i.e., the minimum curve radius. Fig. 6B illustrates a curvature display image IMG2 when the vehicle is traveling on a left curved road R2, curvature of which is intermediate between these two roads R1 and R3.

In the present embodiment, each curvature display image IMG (IMG1, IMG2, IMG3) expresses the curvature of the road R by degree of the curvature of left and right lane markers LN1 and LN2 that indicate the boundary of the road R or lanes. Specifically, in the curvature display image IMG1 having the smallest curvature as shown in Fig. 6A, the lane markers LN1 and LN2 are displayed as extending straight markers ahead of the vehicle V. In the curvature display image IMG3 having the largest curvature as shown in Fig. 6C, the lane markers LN1 and LN2 are displayed so as to be curved significantly to the left. The direction in which the lane markers LN1 and LN2 curve matches the direction in which the road R curves.

In the present embodiment, in addition to the road R and the lane markers LN1 and LN2, an arrow A (A1, A2) pointing in the direction of the curve of the road R is displayed together. In the curvature display images IMG2 and IMG3, the left-pointing arrows A1 and A2 show that the curvature direction of the road R is to the left, and the length of each of the arrows A1 and A2 indicates the degree of the curve, i.e., the magnitude of the curvature.

Specifically, the arrow A2 in the curvature display image IMG3 shown in Fig. 6C is longer than the arrow A1 in the curvature display image IMG2 shown in Fig. 6B, and this difference in length between the arrows A1 and A2 indicates that the curvature shown in the curvature display image IMG3 is larger than the curvature shown in the curvature display image IMG2. Instead of or in addition to the length of the arrow A (A1, A2), the thickness or area of the arrow A may be used to indicate the degree of the curvature of the road R. In the cases of Fig. 6A to Fig. 6C, the arrow A2 in the curvature display image IMG3 shown in Fig. 6C is made thicker and has a larger area than the arrow A1 in the curvature display image IMG2 shown in Fig. 6B.

In this manner, Fig. 6A to Fig. 6C show the curvature of the left curved road R by switching between the three curvature display images IMG1, IMG2, and IMG3 depending on the magnitude of the curvature including zero. However, there is no limit to the number of stages for switching the curvature display images IMG, and it may be any number other than three. For example, the curvature of the left curved road R can be displayed by switching between six images including the case where the curvature is zero. Aside from such a stepwise aspect, the switching of the curvature display images IMG may be gradual, continuous, or stepless. In other words, the curvature display images IMG are configured to be switched gradually depending on the change in curvature.

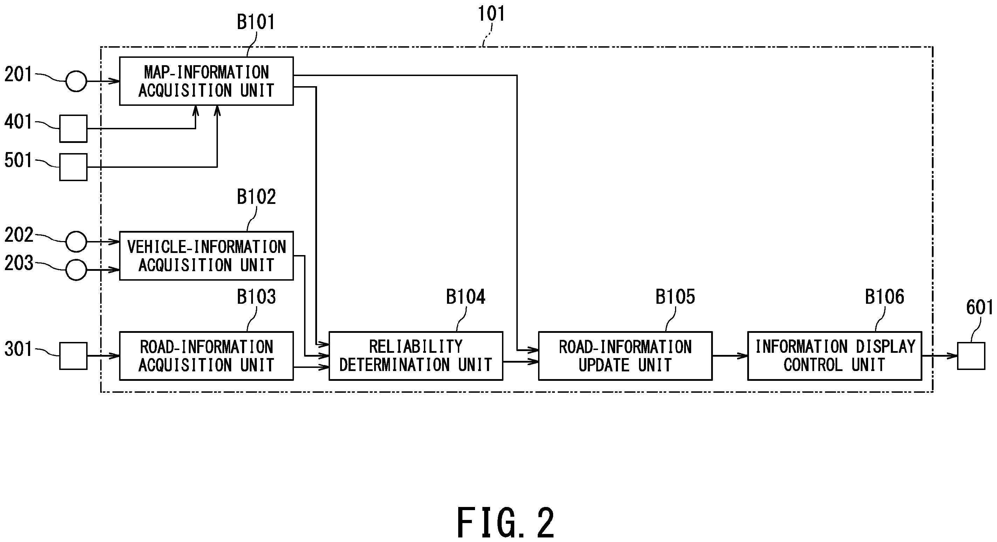

Fig. 2 is a block diagram schematically illustrating the internal configuration of the controller 101 according to the present embodiment.

In the present embodiment, the main functions of the controller 101 includes a map-information acquisition unit B101, a vehicle-information acquisition unit B102, a road-information acquisition unit B103, a reliability determination unit B104, a road-information update unit B105, and an information display control unit B106. The respective functions of these components are achieved as software by a central processing unit, which is installed in the controller 101 and reads in control programs stored in a storage device so as to perform calculations in accordance with commands outputted from the control programs.

The map-information acquisition unit B101 acquires the current position of the own vehicle from the vehicle position sensor 201, acquires the road map information from the in-vehicle navigation system 401, and acquires information on a construction site or an accident from the external communication unit 501. As described above, the information to be acquired by the display controller 101 from the in-vehicle navigation system 401 includes: information on the number of lanes on the road on which the own vehicle is currently traveling; information on road markings such as traveling straight ahead, right turn, and left turn; and information on traffic regulations, in addition to the road map information. The information to be acquired by the controller 101 from the external communication unit 501 includes position information on a construction site or an accident site.

The vehicle-information acquisition unit B102 acquires the yaw rate YAW of the vehicle from the acceleration sensor 202 as information on the behavior of the vehicle, and receives the output signal of the direction indicator 203.

The road-information acquisition unit B103 acquires the curvature C of the road from the front camera 301 as information on the road conditions. The road-information acquisition unit B103 constitutes a "road-information acquisition unit" according to the present embodiment.

On the basis of both the map information acquired from the map-information acquisition unit B101 and the vehicle information acquired from the vehicle-information acquisition unit B102, the reliability determination unit B104 determines reliability of the situation-related information acquired by the road-information acquisition unit B103 (hereinafter referred to as "acquired information"). In the present embodiment, the reliability of the curvature C acquired by the road-information acquisition unit B103 is determined, and this determination is based on: the type of the road on which the vehicle is traveling; presence/absence of a branch road ahead of the vehicle; increase or decrease in the number of lanes ahead of the vehicle; presence/absence of a construction site ahead of the vehicle; the yaw rate YAW of the vehicle; and whether the driver intends to change lanes or not.

As a general trend, if the road on which the vehicle is traveling is an expressway, it can be determined that the reliability is high. If the road on which the vehicle is traveling is an ordinary road, it can be determined that the reliability is low. If there is a branch road ahead of the vehicle, the reliability can be determined to be low. If there is no branch road ahead of the vehicle, the reliability can be determined to be high. If the number of lanes ahead of the vehicle increases or decreases, the reliability can be determined to be low. If the number of lanes ahead of the vehicle remains constant, the reliability can be determined to be high. If there is no construction site ahead of the vehicle, the reliability can be determined to be high. If there is a construction site ahead of the vehicle, the reliability can be determined to be low. If the driver has no intention to change lanes, the reliability can be determined to be high. If the driver has the intention to change lanes, the reliability can be determined to be low.

The yaw rate YAW of the vehicle can be converted into the curvature of the path to be followed by the vehicle, and this converted curvature is compared with the curvature of the road acquired from the front camera 301 so that the comparison result can be used as an indicator of the reliability. On the basis of the degree of matching or deviation between the curvature acquired from the yaw rate and the curvature acquired from the front camera 301, the reliability is determined to be low in the case of large deviation, and is determined to be high in the case of small deviation.

The map-information acquisition unit B101, the vehicle-information acquisition unit B102, and the reliability determination unit B104 constitute a "reliability determination unit" according to the present embodiment.

On the basis of the reliability determined by the reliability determination unit B104, the road-information update unit B105 updates the information to be recognized as information on the road conditions by the controller 101 to the latest information acquired by the road-information acquisition unit B103. In other words, the update conditions for the acquired information are switched depending on this reliability. If the reliability of the acquired information is high, the update conditions are relaxed and the update processing is performed more frequently. Conversely, if the reliability of the acquired information is low, the update conditions are tightened and the update processing is performed less frequently. The road-information update unit B105 constitutes a "road-information update unit" according to the present embodiment.

The information display control unit B106 generates a command signal indicative of the information updated by the road-information update unit B105, and outputs this command signal to the display unit 601. The display unit 601 generates or selects and displays the updated information or curvature-dependent image, i.e., the curvature display image (IMG). The information display control unit B106 constitutes a "road-information display unit" according to the present embodiment.

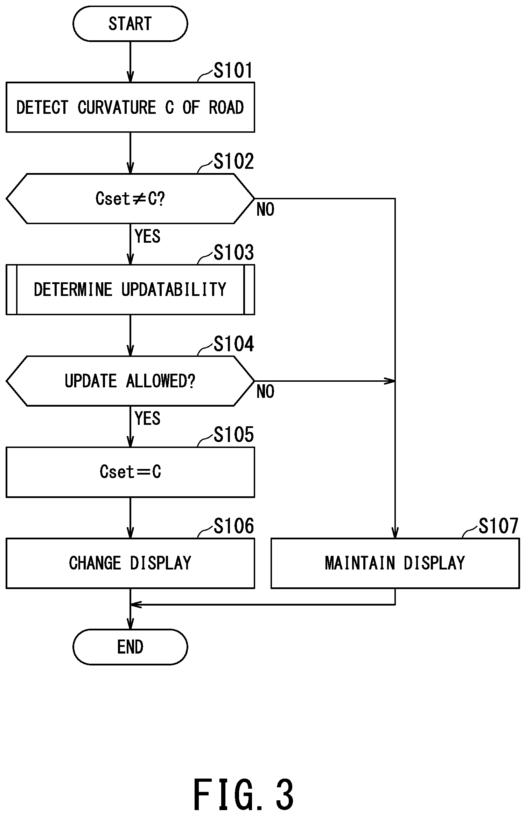

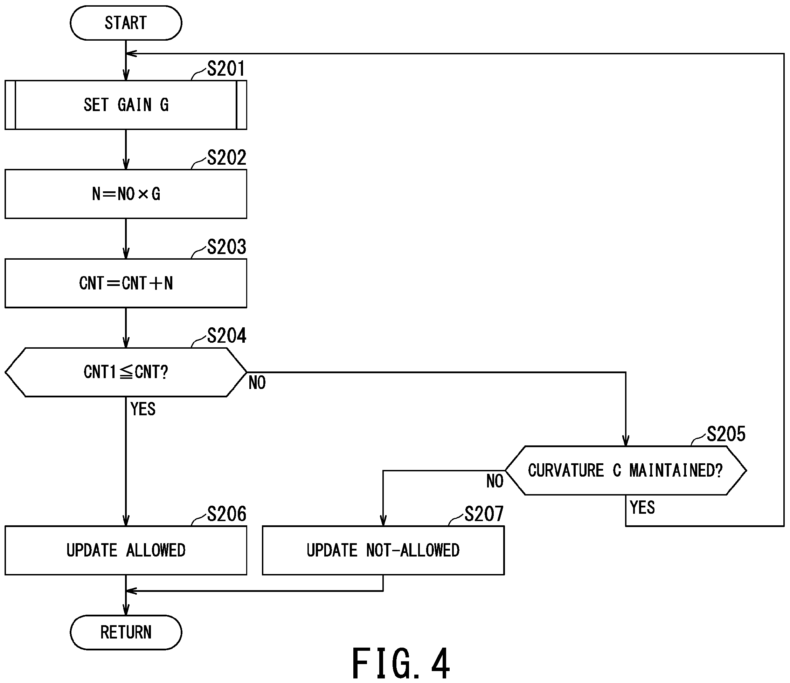

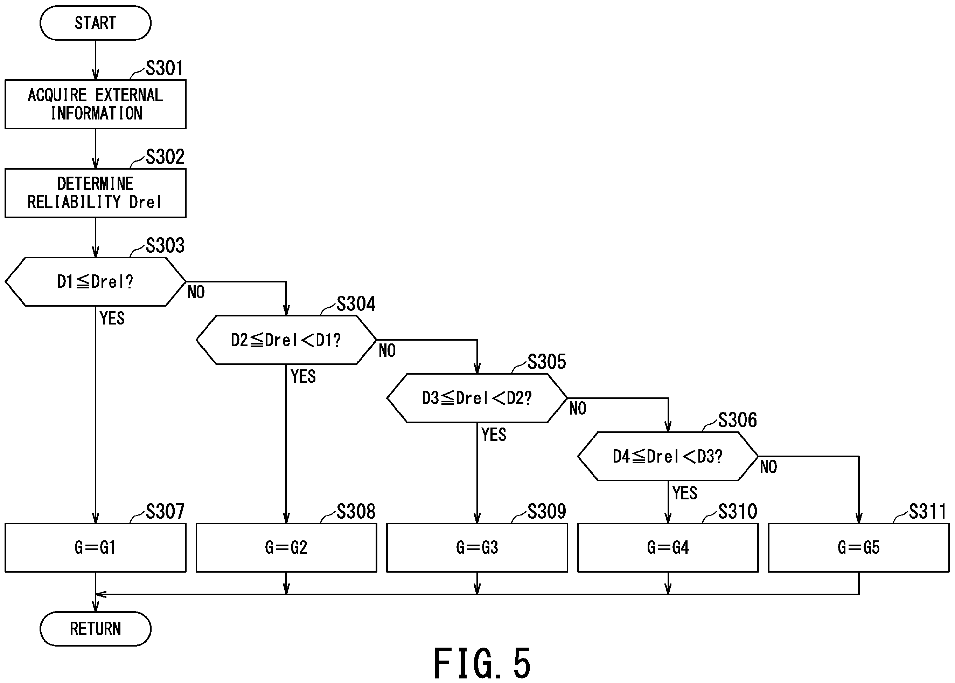

Fig. 3 is a flowchart illustrating an overall flow of the control to be performed by the controller 101 (hereinafter referred to as "the curvature display control"). Fig. 4 illustrates contents of updatability determination processing in the curvature display control, and Fig. 5 illustrates contents of gain setting processing in the curvature display control. After power activation by operating the start switch 701, the controller 101 performs the curvature display control at a predetermined cycle.

In the flowchart shown in Fig. 3, in the step S101, the curvature C of the road is detected. In the present embodiment, the curvature C is detected by acquiring the curvature C from the front camera 301 as information on the road conditions, and the newly acquired curvature C in the current control is hereinafter referred to as "the acquired curvature".

In the step S102, it is determined whether the curvature of the road, i.e., the acquired curvature C has changed from the current curvature Cset recognized by the controller 101 (hereinafter referred to as "the set curvature Cset") or not. In the present embodiment, the range of the curvature C is divided or segmented into three ranges Rc1, Rc2, and Rc3 depending on its magnitude. Specifically, the first range Rc1 is the smallest range that includes the case where the curvature C is zero, the second range Rc2 is the intermediate range larger than the first range Rc1, and the third range Rc3 is the largest range even larger than the second range Rc2. In detail, two boundary values C1 and C2 (0<C1<C2) of different magnitudes for the range of the curvature C are set, the first range Rc1 is defined as the range where the curvature C is equal to or larger than 0 and is smaller than C1, the second range Rc2 is defined as the range where the curvature C is equal to or larger than C1 and is smaller than C2, and the third range Rc3 is defined as the range where the curvature C is equal to or larger than C2. Further, it is determined whether the acquired curvature C has transitioned to another range different from the current range or not. If the acquired curvature C is different from the set curvature Cset, i.e., if the acquired curvature C deviates from the current range to which the set curvature Cset belongs (for example, the second range Rc2) and transitions to another range different from the current range (i.e., the first or third range Rc1, Rc3), the processing proceeds to the step S103. If the acquired curvature C still belongs to the current range, the processing proceeds to the step S107.

In the step S103, updateability determination regarding the acquired curvature C is performed. This determination follows the procedure shown in the flowchart of Fig. 4.

In the step S104, if the reliability of the acquired curvature C is high as a result of the updatability determination and the set curvature Cset is updatable, the processing proceeds to the step S105. If the reliability of the acquired curvature C is low and the set curvature Cset is not updatable, the processing proceeds to the step S107.

In the step S105, the set curvature Cset is updated to the acquired curvature C. As a result, the controller 101 recognizes the newly acquired curvature C in this control as the curvature of the road.

In the step S106, display of the curvature by the display unit 601, i.e., the curvature display image IMG is changed. If the acquired curvature C belongs to the first range Rc1, the controller 101 commands the display unit 601 to display the curvature display image IMG1 shown in Fig. 6A. If the acquired curvature C belongs to the second range Rc2, the controller 101 commands the display unit 601 to display the curvature display image IMG2 shown in Fig. 6B. If the acquired curvature C belongs to the third range Rc3, the controller 101 commands the display unit 601 to display the curvature display image IMG3 shown in Fig. 6C.

In the step S107, display of the current curvature display image IMG is maintained, and display of the curvature by the display unit 601 is maintained.

In the flowchart of Fig. 4, in the step S201, a gain G is set. The setting of the gain G follows the procedure shown in the flowchart of Fig. 5.

In the step S202, an increment value N of a count value CNT for each control cycle is calculated. The increment value N is calculated by multiplying a base value N0 by the gain G (N = N0×G). Although the base value N0 can be set appropriately, the base value N0 is set to 1 (i.e., N=G) in the present embodiment. The count value CNT corresponds to an "updatability determination value" according to the present embodiment.

In the step S203, the count value CNT is updated by adding the increment value N to the current count value CNT (CNT = CNT+N).

In the step S204, it is determined whether the updated count value CNT is equal to or larger than a threshold CNT1 or not. If the count value CNT is equal to or larger than the threshold CNT1, the processing proceeds to the step S206. If the count value CNT is smaller than the threshold CNT1, the processing proceeds to the step S205.

In the updatability determination processing of the present embodiment as described above, the count value CNT for determination is set, the increment value N is set as the change in the count value CNT, and then the count value CNT is compared with the predetermined threshold CNT1. If the count value CNT increases to this threshold CNT1 by adding the increment value N, specifically, adding the cumulative value ΣN of the increment values N accumulated for each control cycle, the curvature is determined to be updatable.

In the step S205, it is determined whether the curvature of the road is changed or not, i.e., whether the curvature C detected by the front camera 301 is changed or not. If the curvature C is not changed and stays constant, the processing returns to the step S201 and the updateability determination processing is continued. If the curvature C is changed, the subject of the updatability determination is determined to be changed, i.e., it is determined that the acquired curvature C being a determination subject of the reliability is changed, and the processing proceeds to the step S207 to stop the updatability determination.

In the step S206, it is determined to be updatable.

In the step S207, it is determined that the curvature is not updatable.

In the flowchart of Fig. 5, in the step S301, external information is acquired. The external information includes: the type of the road on which the vehicle is traveling; presence/absence of a branch road ahead of the vehicle; increase or decrease in the number of lanes ahead of the vehicle; presence/absence of a construction site ahead of the vehicle; the yaw rate YAW of the vehicle; and whether the driver intends to change lanes or not.

In the step S302, the reliability of the curvature C acquired from the front camera 301 is determined on the basis of the external information acquired in the step S301, and an evaluation value Drel that indicates or indexes this reliability is calculated. In the steps S303 to S306, sorting of the results of the reliability is performed depending on the evaluation value Drel. Further, the gain G in accordance with the evaluation value Drel is set in the steps S307 to S311.

In the present embodiment, the reliability is classified into five stages separated by boundary values D1, D2, D3, and D4. Specifically, the reliability Drel is classified into the following stages in descending order: reliability 1 (D1≤Drel), reliability 2 (D2≤Drel<D1), reliability 3 (D3≤Drel<D2), reliability 4 (D4≤Drel<D3), and reliability 5 (Drel<D4). The reliability 1 is the highest reliability and the reliability 5 is the lowest reliability.

In the determination of the reliability, if the type of the road on which the vehicle is traveling is an expressway and the deviation between the curvature C acquired from the front camera 301 and the curvature Ccnv acquired by conversion from the yaw rate YAW (hereinafter referred to as "the converted curvature Ccnv") is smaller than a certain level (i.e., predetermined level), i.e., if the deviation of the acquired curvature C from the converted curvature Ccnv is small, the reliability of the curvature C is determined to be the highest reliability 1.

Conversely, if the deviation of the acquired curvature C from the converted curvature Ccnv is larger than the certain level and the deviation is large, the evaluation criteria are switched depending on whether the road is an expressway or an ordinary road.

If the deviation of the acquired curvature C from the converted curvature Ccnv is large and the road type is an expressway, the following criteria are applied.

The acquired curvature C is compared with the curvature of a clothoid curve, and if the degree of matching between both is less than a certain level (i.e., predetermined level), it is determined to be the reliability 4, which is the lowest reliability among the reliability 2 to reliability 4. The clothoid curve is a curve to be used in a curved section of an expressway, especially at a junction between a straight section and a curved section. In the present embodiment, the display controller 101 stores the curvature of the clothoid curve in association with the map information in advance.

If the degree of matching between the acquired curvature C and the curvature of the clothoid curve is equal to or larger than the certain level and at least one of the following four conditions (a) to (d) is satisfied, the reliability is determined to be the intermediate reliability 3, among the reliability 2 to the reliability 4.
(a) There is a branch road ahead of the vehicle.
(b) The number of lanes ahead of the vehicle is increasing or decreasing.
(c) There is a construction site ahead of the vehicle.
(d) The driver intends to change lanes.

If the degree of matching between the acquired curvature C and the curvature of the clothoid curve is equal to or larger than the certain level and none of the above-described conditions (a) to (d) are satisfied, the reliability is determined to be the highest reliability 2, among the reliability 2 to the reliability 4.

If the deviation of the acquired curvature C from the converted curvature Ccnv is large and the road type is an ordinary road, the reliability of the curvature C is determined to be the lowest reliability 5.

In the step S307, on the assumption that the reliability of the curvature C is the highest (i.e., the reliability 1), the gain G is set to the largest value G1.

In the step S308, on the assumption that the reliability of the curvature C is relatively high (i.e., the reliability 2), the gain G is set to a smaller value G2 (<G1) than in the case of the reliability 1.

In the step S309, on the assumption that the reliability of the curvature C is intermediate (i.e., the reliability 3), the gain G is set to a smaller value G3 (<G2) than in the case of the reliability 2.

In the step S310, on the assumption that the reliability of the curvature C is relatively low (i.e., the reliability 4), the gain G is set to a smaller value G4 (<G3) than in the case of the reliability 3.

In the step S311, on the assumption that the reliability of the curvature C is the lowest (i.e., the reliability 5), the gain G is set to the smallest value G5 (<G4).

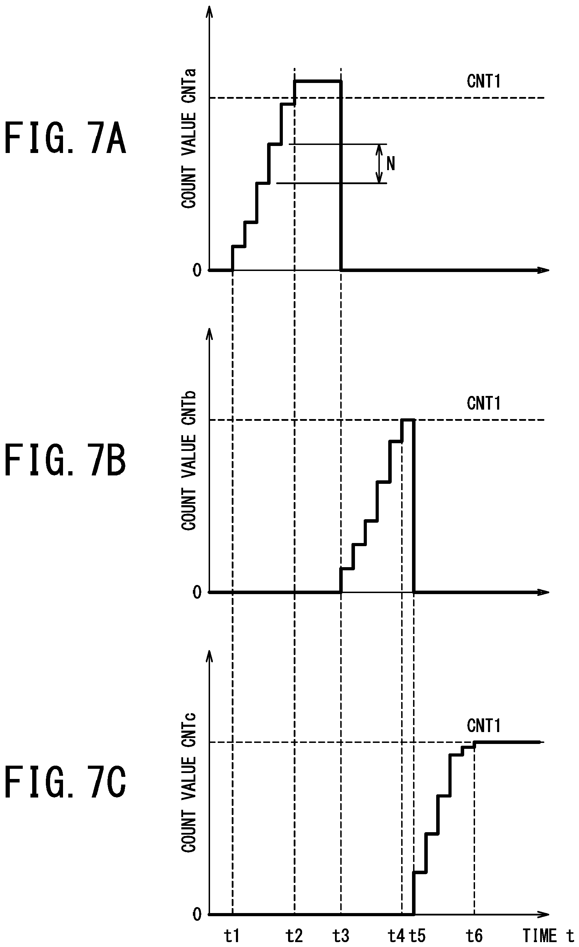

Fig. 7A to Fig. 7C illustrate one case of the updatability determination using the count value CNT.

In the present embodiment, the count values CNTa, CNTb, CNTc are respectively set for the curvature display images IMG1, IMG2, IMG3, and a result of comparison with the threshold CNT1 for each count value CNT is used for determining updatability of the curvature C and whether the curvature display image IMG can be switched or not.

It is assumed that the display unit 601 is displaying the curvature display image IMG2 shown in Fig. 6B and then the curvature C decreases and then increases. When the curvature C acquired from the front camera 301 drops at a time t1, the count value CNT (i.e., the second count value CNTb for medium curvature) is reset to 0, the reliability of the curvature C after this drop is determined, and the increment value N (= N0×G) in accordance with the reliability is sequentially added to the count value CNT (i.e., the first count value CNTa for small curvature). When the first count value CNTa increases to the threshold CNT1 at a time t2, it is determined to be updatable, the set curvature Cset is updated to the acquired curvature C, and the curvature display image IMG is changed to the first image IMG1 for the small curvature shown in Fig. 6A.

Afterward, when the acquired curvature C acquired from the front camera 301 increases at a time t3, the first count value CNTa is reset to 0, the reliability of the increased curvature C is determined, and the increment value N (= N0×G) in accordance with the reliability is sequentially added to the second count value CNTb. When the second count value CNTb increases to the threshold CNT1 at a time t4, it is determined to be updatable, the set curvature Cset is updated to the acquired curvature C, and the curvature display image IMG is changed to the second image IMG2 for the medium curvature shown in Fig. 6B.

Similarly, when the acquired curvature C acquired from the front camera 301 further increases at a time t5, the second count value CNTb is reset to 0, the reliability of the increased curvature C is determined, and the increment value N (= N0×G) in accordance with the reliability is sequentially added to the third count value CNTc for the large curvature. When the third count value CNTc increases to the threshold CNT1 at a time t6, it is determined to be updatable, the set curvature Cset is updated to the acquired curvature C, and the curvature display image IMG is changed to the third image IMG3 for the large curvature shown in Fig. 6C.

The vehicle road-condition detection apparatus 1 according to the present embodiment has the above-described configuration. The effects to be obtained by the present embodiment will be described below.

The reliability of the information on the road conditions acquired from the images or videos generated by the front camera 301 is determined, and the information to be used for display and other controls is updated depending on this reliability. This configuration can suppress a situation where detection instability and/or hunting in the display is caused in the case of using the front camera 301 for acquiring the information and this trouble causes a further trouble in the display or other controls. For example, this configuration can avoid a situation where the driver feels uneasy due to hunting occurring in the display.

Since the information updated depending on the reliability is displayed timely or in real time, this configuration can encourage the driver to be aware of the road conditions during driving without making the driver anxious.

For example, when the curvature of the road on which the vehicle is traveling is displayed during autonomous driving, the driver can check that the driving situation of the vehicle (e.g., steering) is in line with the shape of the road, which gives the driver a sense of security.

Since the information is updated to the latest information more frequently as the reliability of the information (e.g., the curvature C) acquired from the front camera 301 is higher, this configuration can display information that matches the actual road conditions as closely as possible.

Furthermore, the variable count value CNT is set, the updatability is determined by this count value CNT, and the change amount (i.e., the increment value N in the present embodiment) to be added to or subtracted from the count value CNT is made different depending on the reliability of the information. For example, the gain G is switched in such a manner that the increment value N is increased more for higher reliability and is decreased more for lower reliability. In this configuration, the respective information items acquired from the front camera 301 with different reliability levels can be uniformly evaluated, and thus, relevant controls can be simplified.

The count value CNT is not limited to the aspect of being increased by a different increment value N but may have a positive or negative value depending on the reliability of the change amount (i.e., increment or decrement). It may be configured such that the count value CNT is increased by a positive change in the case of high reliability and the count value CNT is decreased by a negative change in the case of low reliability.

In the present embodiment, the road-condition detection apparatus 1 is configured for the purpose of displaying information, and the road-condition detection apparatus 1 is always in operation after power activation by the start switch 701 such that the driver can always recognize the curvature of the road and its change through the curvature display image IMG while driving the vehicle. The road-condition detection apparatus 1 is not limited to such an aspect but can also be configured such that the start switch 701 is installed separately from the vehicular power switch such as an ignition switch and the driver can select whether to activate or deactivate the start switch 701 by operating the start switch 701 while driving the vehicle.

Further, the road-condition detection apparatus 1 may be configured to operate as part of or in conjunction with another apparatus so as to detect the road conditions and provide the information on the road conditions. For example, the road-condition detection apparatus 1 displays the information as part of or in conjunction with a vehicular driving support apparatus that implements automatic cruise control. Under implementation of the automatic cruise control, the steering angle of the vehicle is automatically controlled to keep the vehicle in its lane or to follow a preceding vehicle. The road-condition detection apparatus 1 displays the information acquired from the front camera 301 and updated depending on the reliability, such as the curvature, on the display unit 601, and provides this information to the driving support apparatus. The driving support apparatus refers to the provided information and reflects it in the automatic cruise control.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

### REFERENCE SIGNS LIST

- V: vehicle
- 1: display control apparatus
- 101: display controller
- 201: vehicle position sensor
- 202: acceleration sensor
- 203: direction indicator
- 301: front camera
- 401: in-vehicle navigation system
- 501: external communication unit
- 601: display unit
- 701: start switch

## Claims

1. A vehicular road-condition detection apparatus (1) comprising:
a road-information acquisition unit (B103) configured to use an image or video for acquiring information on conditions of a road (R: R1; R2; R3) on which a vehicle is traveling, the image or video being generated by a front camera (301) disposed to be able to image the road (R: R1; R2; R3) ahead of the vehicle;
a reliability determination unit (B101, B102, B104) configured to determine reliability of the information on conditions of the road acquired by the road-information acquisition unit (B103) based on map information of the road or vehicle information on behavior of the vehicle; and
a road-information update unit (B105) configured to update the information on conditions of the road to the latest information acquired by the road-information acquisition unit (B103) depending on the reliability of the information determined by the reliability determination unit (B101, B102, B104).

2. The vehicular road-condition detection apparatus (1) according to claim 1, further comprising a road-information display unit (B106) configured to display information updated by the road-information update unit (B105).

3. The vehicular road-condition detection apparatus (1) according to claim 1 or claim 2, wherein the road-information acquisition unit (B103) is configured to acquire curvature of the road as the information on conditions of the road.

4. The vehicular road-condition detection apparatus (1) according to any one of claim 1 to claim 3, wherein the road-information update unit (B105) is configured to update the information on conditions of the road more frequently as the reliability of the information is higher.

5. The vehicular road-condition detection apparatus (1) according to any one of claim 1 to claim 4, wherein:
the road-information update unit (B105) is configured to:
have an updatability determination value that is set to be able to be increased or decreased;
update the information when the updatability determination value reaches a predetermined value; and
differentiate change amount depending on the reliability of the information, the change amount being added to or subtracted from the updatability determination value at each predetermined period of time.

6. The vehicular road-condition detection apparatus (1) according to any one of claim 1 to claim 5, wherein the map information includes at least one of:
a type of a road on which the vehicle is traveling;
presence/absence of a branch road ahead of the vehicle;
increase or decrease in number of lanes ahead of the vehicle; and
presence/absence of a construction site ahead of the vehicle.

7. The vehicular road-condition detection apparatus (1) according to any one of claim 1 to claim 6, wherein the vehicle information includes at least one of a yaw rate of the vehicle and whether a driver intends to change lanes or not.

8. A vehicular display control method comprising the steps of:
using an image or video to acquire information on conditions of a road (R: R1; R2; R3) on which a vehicle is traveling, the image or video being generated by a front camera (301) disposed to be able to image the road (R: R1; R2; R3) ahead of the vehicle;
acquiring map information of the road or vehicle information on behavior of the vehicle;
determining reliability of the information on conditions of the road based on the map information of the road or the vehicle information on behavior of the vehicle;
updating the information on conditions of the road to the latest information depending on the reliability of the information; and
displaying updated information.
